Europäisches Patentamt

European Patent Office

Office européen des brevets

(11) Veröffentlichungsnummer: **0 315 904**
**A1**

## (12) EUROPÄISCHE PATENTANMELDUNG

(21) Anmeldenummer: 88118364.4

(22) Anmeldetag: 04.11.88

(51) Int. Cl.⁴: **C08G 75/04**

(30) Priorität: 11.11.87 DE 3738276

(43) Veröffentlichungstag der Anmeldung:
17.05.89 Patentblatt 89/20

(84) Benannte Vertragsstaaten:
BE DE FR GB IT

(71) Anmelder: BAYER AG
Konzernverwaltung RP Patentabteilung
D-5090 Leverkusen 1 Bayerwerk(DE)

(72) Erfinder: Dorf, Ernst-Ulrich, Dr.
Bodelschwinghstrasse 16
D-4150 Krefeld 1(DE)
Erfinder: Dicke, Hans-Rudolph, Dr.
Baumhofstrasse 28
D-5780 Bestwig(DE)
Erfinder: Eckhardt, Volker, Dr.
Bodelschwinghstrasse 14
D-4150 Krefeld 1(DE)
Erfinder: Genz, Joachim, Dr.
Bodelschwinghstrasse 16
D-4150 Krefeld 1(DE)

(54) Verfahren zur Herstellung von Polyarylensulfiden.

(57) Die Erfindung betrifft ein Verfahren zur Herstellung von Polyarylensulfiden durch Schmelzkondensation, bei dem die Bildung der Sulfidobrücken des Polymeren durch Abspaltung einer unter den Reaktionsbedingungen flüchtigen Verbindung erfolgt.

EP 0 315 904 A1

## Verfahren zur Herstellung von Polyarylensulfiden

Die Erfindung betrifft ein Verfahren zur Herstellung von Polyarylensulfiden durch Schmelzkondensation, bei dem die Bildung der Sulfidobrücken des Polymeren durch Abspaltung einer unter den Reaktionsbedingungen flüchtigen Verbindung erfolgt.

Polyarylensulfide (PAS) und Verfahren zu ihrer Herstellung sind bekannt (aus Halogenthiophenolaten: z. B. US-PS 32 74 165, J. Polymer Sci. 58 - (1962) 351-367; aus Natriumsulfid und Dihalogenaromaten: z. B. US-PS 33 54 129).

Diese Verfahren haben den Nachteil, daß bei ihrer Durchführung Lösungsmittel verwendet werden müssen. Zum Preis für die Lösungmittel kommen aufwendige Apparaturen zur Reaktionsdurchführung, Wiedergewinnungskreisläufe zur Rückgewinnung der Lösungsmittel, aufwendige Aufarbeitung des Nebenproduktes Natriumchlorid und ein vollkommen getrennter Verfahrensschritt zur Granulierung des Produktes hinzu.

Das erfindungsgemäße Verfahren vermeidet diese Nachteile, da Halogenarylthiosilane in Masse ohne Lösungsmittel kondensiert werden können. Ein weiterer Vorteil ist, daß bei der Kondensation unter den Reaktionsbedingungen flüchtige Abspaltprodukte entstehen, die aus dem Reaktionsgefäß entweichen können. Das PAS fällt in geschmolzener Form in hoher Reinheit an.

Das erfindungsgemäße Verfahren ist dadurch gekennzeichnet, daß Halogenarylthiosilane der Formel (I)

Hal-Ar-S-SiR$_3$     (I),

in welcher
Hal für Halogen wie F und Cl steht,
Ar für zweibindige einkernige oder anellierte $C_6$-$C_{24}$-aromatische Reste oder heterocyclische Reste mit bis zu 3 Heteroatomen wie N, O, S oder zwei einbindige aromatische bzw. heterocyclische Einheiten steht, die über eine Einfachbindung und/oder über zweibindige $C_6$-$C_{24}$-Aromaten bzw. Heterocyclen und/oder über eine oder mehrere Einheiten ausgewählt aus der Gruppe -O-, -NR$^1$-, -CR$^1_2$-, -S-, -S(O)-, -S(O)$_2$-, -C(O)-, -C(O)-O-, -C-(O)-NR$^1$- und -[C(O)-]$_2$N- (R$^1$ = $C_1$-$C_4$-Alkyl, $C_5$-$C_{10}$-Cycloalkyl, $C_6$-$C_{24}$-Aryl, $C_7$-$C_{30}$-Aralkyl oder -Alkaryl) verknüpft sein können, wobei die einzelnen aromatischen Ringe 1 bis 4 Substituenten R$^2$ tragen können, ausgewählt aus den unter R$^1$ aufgeführten Resten und/oder -OR$^1$-, -NR$^1$-, -CR$^1_3$-, -SR$^1$-, -S(O)-R$^1$, -S(O)$_2$-R$^1$, -C(O)-R$^1$, -C(O)-O-R$^1$, -C(O)-NR$^1_2$-, steht und
R für $C_1$-$C_4$-Alkyl oder $C_5$-$C_{20}$-Cycloalkyl steht, gegebenenfalls in Gegenwart von 0,01 bis 1 Gew.-% (bezogen auf die Menge der Ausgangsmaterialien der Formel (I)) mindestens eines Alkaliund/oder Erdalkali-bzw. Ammoniumhalogenids als Katalysator und gegebenenfalls in Gegenwart von 0,01 bis 1 Gew.-% (bezogen auf die Menge der Ausgangsmaterialien der Formel (I)) eines üblichen Phasentransferkatalysators als Cokatalysator, bei Temperaturen von 150 bis 400° C unter Abspaltung von Halogentrialkylsilan bzw. Halogen(tris)cycloalkylsilan umgesetzt werden.

Das erfindungsgemäße Verfahren kann z.B. in einer Apparatur durchgeführt werden, bei der die Teile, die mit der (heißen) Reaktionsmischung in Berührung kommen (Wanderung, Rühreinrichtung usw.), aus Materialien bestehen, die keine Schwermetallionen abgeben (z.B. Glas, Titan, Zirkon usw.). In diesem Fall kann auf einen Katalysator und Cokatalysator verzichtet werden.

Wird das erfindungsgemäße Verfahren in anderen als den o.g. Apparaturen durchgeführt, beispielsweise in (Edel)- Stahlapparaturen usw., so kann die Verwendung von Katalysatoren und gegebenenfalls Cokatalysatoren vorteilhaft sein.

Die Apparatur kann aus verschiedenen Materialien bestehen, z.B. aus Titan und Glas usw. Z.B. kann eine Apparatur verwendet werden, die teilweise aus Titan und teilweise aus Glas besteht.

Der Druck kann zwischen 0,3 und etwa 4 bar liegen. Die Reaktion kann diskontinuierlich (batch-Fahrweise) und kontinuierlich durchgeführt werden. Das Reaktionsgefäß wird zweckmäßig mit einer Vorrichtung zur Kondensation des Halogentrialkylsilans bzw. Halogen(tris)cycloalkylsilans ausgerüstet, das zur erneuten Herstellung des Ausgangsmaterials verwendet werden kann.

Vorrichtungen zur Weiterverarbeitung des Polymeren wie Extruder, Kneter etc. können direkt an das Reaktionsgefäß angeschlossen oder in das Reaktionsgefäß integriert sein.

Die Polymerisationsreaktion kann durch Variation der Ausgangsmaterialien beeinflußt werden. Beispielsweise kann der Kettenaufbau durch Zugabe von bestimmten monofunktionellen Verbindungen der Formel (II) und/oder der Formel (III)

R$^3$-Ar-S-SiR$_3$     (II),
Hal-Ar-R$^3$     (III),

in welchen
R$^3$ für R$^2$ und H steht und
R, R$^2$, Hal und Ar die bei Formel (I) angegebene Bedeutung haben, gesteuert werden.

Durch den Einsatz trifunktioneller Ausgangsstoffe ist eine zusätzliche Erhöhung des Molekulargewichts bis hin zur Vernetzung möglich.

Das erfindungsgemäße Verfahren eignet sich auch zur Herstellung von Blockcopolymeren, wobei die jeweiligen Blöcke vor dem Zusammenfügen durch Homopolymerisation verschiedener Ausgangsmaterialien mit unterschiedlichen Strukturen gebildet werden.

Das erfindungsgemäße Verfahren kann gegebenenfalls in Gegenwart von Zusätzen und Verdünnungsmitteln, die unter den Reaktionsbedingungen inert bleiben (beispielsweise aprotischen organischen Lösungsmitteln, z.B. N-Alkyllactame, N,N′-Dialkyl-N,N′-alkylenharnstoffe, Diphenylether, Biphenyl etc.), Polymeren oder anorganische Inertstoffen durchgeführt werden.

Beispiele für erfindungsgemäß einsetzbare Halogenarylthiosilane der Formel (I) sind 4-Chlorphenyltrimethylsilylthioether, 3-Chlorphenyltrimethylsilylthioether, 4-Fluorphenyltrimethylsilylthioether, 3-Fluorphenyl trimethylsilylthioether, 4-Chlor-4′-(trimethylsilylthio)biphenyl, 4-Fluor-4′-(trimethylsilylthio)biphenyl, 4-Chlor-4′-(trimethylsilylthio)benzophenon, 4-Fluor-4′-(trimethylsilylthio)benzophenon etc.

Bevorzugt werden 4-Chlorphenyltrimethylsilylthioether, 3-Chlorphenyltrimethylsilylthioether und 4-Chlor-4′-(trimethylsilylthio)biphenyl.

Beispiele für erfindungsgemäß einsetzbare monofunktionelle Verbindungen der Formel (II) sind (Phenylthio)-trimethylsilan, 4-(Trimethylsilylthio)-diphenylsulfid etc.

Beispiele für erfindungsgemäß einsetzbare monofunktionelle Verbindungen der Formel (III) sind 4-Chlordiphenyl, 1-Chlornaphthalin, 2-Chlornaphthalin, 4-Chlordiphenylsulfid, 4-Chlordiphenylether, 4-Fluordiphenyl, 1-Fluornaphthalin, 2-Fluornaphthalin, 4-Fluordiphenyl-sulfid, 4-Fluordiphenylether etc.

Bevorzugt werden 4-Chlordiphenyl, 4-Chlordiphenylsulfid und 4-Chlordiphenylether.

Beispiele für erfindungsgemäß einsetzbare Katalysatoren sind Ammoniumchlorid, Ammoniumfluorid, Lithiumchlorid, Lithiumfluorid, Natriumchlorid, Natriumfluorid, Kaliumchlorid, Natriumbromid, Kaliumfluorid, Kaliumiodid, Rubidiumchlorid, Rubidiumfluorid, Cäsiumchlorid, Cäsiumfluorid, Calciumchlorid, Calciumfluorid etc.

Bevorzugte Katalysatoren sind die Fluoride der Alkali-(z.B. Na, K, Cs) und Erdalkalimetalle (z.B. Mg, Ca) und Ammoniumfluorid.

Besonders bevorzugt werden Kaliumfluorid, Cäsiumchlorid und Cäsiumfluorid.

Beispiele für erfindungsgemäß einsetzbare Phasentransferkatalystoren als Cokatalysatoren sind 18-Krone-6, Dibenzo-18-Krone-6 etc.

Im allgemeinen wird das Schmelzfließverhalten von Polyarylensulfiden nach ASTM 1238-70 bei 316° C unter Verwendung eines 5 kg-Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta_m$ der Polymerschmelze (in Pa•s) bei 306° C in Abhängigkeit von der Schubspannung (in Pa) mit Hilfe eines Instron-Rotationsviskosimeters bestimmt.

Man kann auf diese Weise die Schmelzviskosität in einem sehr weiten Bereich von $10^1$ bis $10^7$ Pa•s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron. Angegeben wird die Schmelzviskosität, die bei einer Schubspannung von $\tau = 10^2$ Pa gemessen wird.

Die erfindungsgemäßen Polyarylensulfide besitzen direkt nach der Herstellung im allgemeinen Schmelzviskositäten von $0,1•10^1$ bis $5•10^4$ Pa•s, vorzugsweise $0,1•10^1$ bis $1,5•10^3$ Pa•s.

Die erfindungsgemäßen Polyarylensulfide können direkt nach der Synthese mit anderen Polymeren, Pigmenten und Füllstoffen, beispielsweise Graphit, Metallpulver, Glaspulver, Quarzmehl, Quarzgut, Glasfasern und Kohlefasern gemischt oder mit den für Polyarylensulfiden üblichen Stabilisatoren oder Entformungsmitteln versetzt werden. Sie können direkt durch Extrusion, Extrusionsblasen, Spritzgießen oder sonst übliche Verarbeitungstechniken zu Folien, Fasern oder Formkörpern verarbeitet werden.

Diese können in üblicher Weise Verwendung finden, z.B. als Automobilteile, Armaturen, Elektroteile, z.B. Schalter, elektronische Tafeln, elektronische Bauteile, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen sowie Haushaltsgeräten etc.

## Beispiel 1

25 g 4-Chlorphenyltrimethylsilylthioether mit 100 mg Cäsiumfluorid werden in einer Rührapparatur bei 165° C vorgelegt und schrittweise aufgeheizt. Be einer Temperatur von 270° C beginnt der Ansatz zu sieden. Nach 14 Stunden stetiger Temperatursteigerung bis auf 340° C, wobei ein leicht flüchtiges Kondensat übergeht und der Rückfluß allmählich aufhört, läßt man den Ansatz erkalten. Im Kondensat kann Trimethylchlorsilan nachgewiesen werden. Der Schmelzkuchen wird zerkleinert und in Isopropanol aufgenommen und gewaschen.

Nach Trocknung im Vakuum verbleiben 9,8 g ( = 68 %) eines grauen Pulvers mit einer Schmelzviskosität von 2 Pa•s und einem Schmelzpunkt von 255° C.

**Ansprüche**

1. Verfahren zur Synthese von Polyarylensulfiden, dadurch gekennzeichnet, daß Halogenarylthiosilane der Formel (I)

Hal-Ar-S-SiR₃     (I),

in welcher
Hal für Halogen wie F und Cl steht,
Ar für zweibindige einkernige oder anellierte $C_6$-$C_{24}$-aromatische Reste oder heterocyclische Reste mit bis zu 3 Heteroatomen wie N, O, S oder zwei einbindige aromatische bzw. heterocyclische Einheiten steht, die über eine Einfachbindung und/oder über zweibindige $C_6$-$C_{24}$-Aromaten bzw. Heterocyclen und/oder über eine oder mehrere Einheiten ausgewählt aus der Gruppe -O-, -NR¹-, -CR¹₂-, -S-, -S(O)-, -S(O)₂-, -C(O)-, -C(O)-O-, -C-(O)-NR¹- und -[C(O)-]₂N- (R¹ = $C_1$-$C_4$-Alkyl, $C_5$-$C_{10}$-Cycloalkyl, $C_6$-$C_{24}$-Aryl, $C_7$-$C_{30}$-Aralkyl oder -Alkaryl) verknüpft sein können, wobei die einzelnen aromatischen Ringe 1 bis 4 Substituenten R² tragen können, ausgewählt aus den unter R¹ aufgeführten Resten und/oder -OR¹, -NR¹-, CR¹₃-, -SR¹-, -S(O)-R¹, -S(O)₂-R¹, -C(O)-R¹, -C(O)-O-R¹, -C(O)-NR¹₂-, steht und
R für $C_1$-$C_4$-Alkyl oder $C_5$-$C_{20}$-Cycloalkyl steht, gegebenenfalls in Gegenwart von 0,01 bis 1 Gew.-% (bezogen auf die Menge der Ausgangsmaterialien der Formel (I)) mindestens eines Alkali- und/oder Erdalkali- bzw. Ammoniumhalogenids als Katalysator und gegebenenfalls in Gegenwart von 0,01 bis 1 Gew.-% (bezogen auf die Menge der Ausgangsmaterialien der Formel (I)) eines üblichen Phasentransferkatalysators als Cokatalysator, bei Temperaturen von 150 bis 400° C unter Abspaltung von Halogentrialkylsilan bzw. Halogen(tris)-cycloalkylsilan umgesetzt werden.

2. Verfahren nach Anspruch 1, dadurch gekennzeichnet, daß als Katalysator mindestens ein Fluorid der Alkali- und Erdalkalimetalle bzw. Ammoniumfluorid eingesetzt wird.

3. Verfahren nach Anspruch 1, dadurch gekennzeichnet, daß als Katalysator Cäsiumfluorid Verwendung findet.

4. Verfahren nach Anspruch 1, dadurch gekennzeichnet, daß als Katalysator Cäsiumchlorid Verwendung findet.

5. Verfahren nach Anspruch 1, dadurch gekennzeichnet, daß als Katalysator Kaliumfluorid und als Cokatalysator der Kronenether 18-Krone-6 Verwendung findet.

6. Verfahren nach Anspruch 1, dadurch gekennzeichnet, daß als (Halogenarylthio)silan der Formel (I) 4-Chlorphenyltrimethylsilylthioether Verwendung findet.

7. Verfahren nach Anspruch 1, dadurch gekennzeichnet, daß die Reaktionsapparatur in allen Teilen, die mit der heißen Reaktionsmischung in Berührung kommen, aus Materialien besteht, die keine Schwermetallionen abgeben.

8. Verfahren nach Anspruch 7, dadurch gekennzeichnet, daß kein Katalysator und Cukatalysator verwendet wird.

9. Verfahren nach Anspruch 7, dadurch gekennzeichnet, daß die Reaktionsapparatur aus Titan und gegebebenfalls Glas besteht.

**Europäisches Patentamt**

# EUROPÄISCHER RECHERCHENBERICHT

Nummer der Anmeldung

EP 88 11 8364

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 088 831 (GIST-BROCADES)<br>* Ansprüche 1,5,6,10; Beispiele 1,2 *<br>--- | 1 | C 08 G 75/04 |
| A | CHEMICAL ABSTRACTS<br>Band 95, Nr. 9, 31. August 1981,<br>abstract 79580; S. KOZUKA : "Kinetic Study on the reaction of (arylthio)trimethylsilanes with phenacyl bromide giving aryl phenacyl sulfides and bromotrimethylsilane"; & BULL CHEM SOC JPN, 1981, 54(5) 1420-3<br>--- | 1 | |
| A | CHEMICAL ABSTRACTS<br>Band 98, Nr. 13, 28. März 1983,<br>Abstract 107 389; S. KOZUKA: "Kinetic study on the reaction of (arylthio)trimethylsilane with benzoyl chloride giving S-aryl thiobenzoate and chlorotrimethylsilane"; & MEM FAC ENG OSAKA CITY UNIV, 1981, 22 115-119<br>--- | 1 | |
| A | EP-A-0 179 380 (PHILLIPS PETROLEUM CO)<br>* Anspruch 1 *<br>----- | 1 | **RECHERCHIERTE SACHGEBIETE (Int. Cl.4)**<br><br>C 08 G 75/00 |

Der vorliegende Recherchenbericht wurde für alle Patentansprüche erstellt

| Recherchenort | Abschlußdatum der Recherche | Prüfer |
|---|---|---|
| BERLIN | 03-02-1989 | BOEKER R.B. |